# EUROPEAN PATENT SPECIFICATION

(11) **EP 2 093 162 B1**
(45) Date of publication and mention of the grant of the patent: **14.08.2019**
(21) Application number: 08003132.1
(22) Date of filing: 20.02.2008
(51) Int. Cl.: B65D 81/26, B01D 53/28, B01J 20/28, B65D 51/30

(54) **MOISTURE ABSORBING POLYMERIC FORMULATIONS WITH ENHANCED ABSORPTION PROPERTIES**
FEUCHTIGKEITSABSORBIERENDE POLYMERZUSAMMENSETZUNGEN MIT VERBESSERTEN ABSORPTIONSEIGENSCHAFTEN
COMPOSITIONS POLYMÉRIQUES POUR L'ABSORPTION D'HUMIDITÉ AUX PROPRIÉTÉS D'ABSORPTION AMÉLIORÉES

(43) Date of publication of application: 26.08.2009
(73) Proprietor: Clariant Production (France) S.A.S., 60350 Trosly Breuil (FR)
(72) Inventor: Kröhnke, Christoph, 94600 Choisy-le-Roi (FR); Logel, Valère, 92300 Levallois-Perret (FR); Lätsch, Stefan, 92500 Rueil Malmaison (FR); Portier, Benoît, 18000 Bourges (FR)
(74) Representative: Jacobi, Carola

(56) References cited:
- WO-A-2005/049297
- JP-A- 2006 116 501
- JP-A- 2007 099 886
- JP-A- 2007 289 881
- JP-A- 2007 291 258
- US-A- 5 432 214
- US-A1- 2008 012 172

## Description

This invention relates generally to a polymeric product with an absorbing agent entrained therein, said absorbing agent increasing the permeability or porosity of and enhancing the diffusion through the polymeric matrix of the polymeric product.

More particularly the present invention relates to a moisture absorbing polymeric product comprising a blend of a non-elastomeric polymeric material and a water absorbing agent, said agent having at least two components of which at least one is swellable when brought into contact with water. The invention relates furthermore to the use of said product for bottling or storing at least one moisture sensitive material, and a method for producing said polymeric product.

### Background of the Invention

Many moisture-sensitive products must be shipped and stored in conditions that are as free from moisture as possible. For example, medications and diagnostic test strips often lose some of their efficacy after prolonged exposure to moisture and are preferably shipped and stored in moisture free environments. Containers for holding such products may be fashioned out of moisture-impermeable material, such as well-known thermoplastics, that resist entry of exterior moisture. However, entry of moisture into such containers is inevitable, either through diffusion or the opening and closing of the container, thereby exposing the product to humidity. In the case of medications, the end-user often opens the plastic container repeatedly in order to obtain just one dosage, exposing the remaining dosages to undesirable moisture-bearing air. Therefore, such containers preferably include means to absorb any moisture that enters the container before it affects the moisture-sensitive product inside.

Other items, such as food or other organic products, may actually release moisture after being placed within a container or sealed packaging, and if the packaging is substantially moisture-impermeable, then the moisture will remain in close contact with the product. In many cases this released moisture may actually be damaging to the product that released the moisture. In this instance, some desiccating means is preferably included in the packaging to absorb this released moisture and maintain a relatively dry environment.

Still other items, such as electronic components, may require a substantially moisture-free environment during shipment and storage to provide optimal performance. Such items are typically shipped in virtually moisture-impermeable containers, but the presence of initially trapped moisture, or the seepage of moisture over time, could still affect performance of such products. Once again, a desiccating means is preferably included in the shipping container that will absorb moisture, while not having an effect on the other components.

In order to absorb such excess moisture and protect the contained products, desiccating materials have been introduced into the interior of containers. These desiccants are usually in the form of powders or granules and therefore must be contained in some manner to prevent contamination of the product. Previous attempts to introduce desiccants to such containers have included the use of bags and packets formed from breathable materials, perforated plastic canisters, desiccant tablets and aerated plastic cartridges with the desiccant inside. These containers are problematic, however, as any breakage would release the desiccant freely into the container. Also, these desiccant containers can release some amount of dust originating from the desiccant fill and adversely affect the product to be protected from moisture. Other solutions involve the creation of a separate compartment within the container to hold the desiccant (for example in a desiccant filled stopper for a tube, or a side compartment within the tube), but such a compartment typically limits the moisture-to-desiccant contact and reduces the absorption rate. There is also the ever present danger of damage to the side compartment which will also release desiccant into the main container.

Thus, there is a need for a means of introducing an absorbing agent into a plastic container or other article of manufacture while preventing the absorbing agent from being released and potentially contacting the moisture-sensitive product. One means for accomplishing this goal is entraining the absorbing agent directly into a plastic structure, such that the desiccant cannot be released. A problem inherent in such structures, however, is that once the absorbing agent is entrained within the plastic matrix, it has lower contact with the outside moisture.

WO 96/04189 and EP 0 879 772 A2 disclose a container for moisture sensitive materials. The container is made of a substantially atmospheric moisture-impermeable material and incorporates a solid element which is made at least in part of a desiccant polymer. The desiccant polymer exhibits either inherently desiccant properties such as a hydrophilic polymer, in particular a hydrogel, or includes a desiccant filler. Particularly disclosed is a desiccant polymer made of an elastomeric material such as a natural or synthetic rubber, compounded with a desiccant material such as a dried molecular sieve or calcium oxide, or a mixture thereof.

EP 0 400 460 B1 discloses a moisture-absorbent composition containing, in given amounts, a thermoplastic resin and magnesium sulphate represented by the formula MgSO₄·nH₂O (0 ≤ n ≤ 3). Optionally further included in this composition is, again in a certain amount, inter alia calcium oxide, aluminum oxide, silicon oxide, barium oxide, and cobalt chloride and/or a zeolite.

US 5 432 214 discloses polymer-based dehydrating materials, which comprise, in certain amounts, one or more thermoplastic or thermosetting polymers, one or more dehydration agents, one or more elastomers, and fibres of a certain length such as synthetic fibres, vegetable fibres and animal fibres. The dehydration agent can be silica gel or a molecular sieve. This document discloses also a moisture absorbing polymeric product comprising a blend of a non-elastomeric thermoplastic polystyrene material and a water absorbing agent which comprises at least a molecular sieve and cotton fibres.

Finally, DE 40 13 799 A1 discloses a container and a closure for a container exhibiting an inserted part containing a granular dehydrating agent. The inserted part consists of a plastic material, which contains the granular dehydrating agent in a bound manner in such a way that a substantial part of the active surface of the granules faces the interior of the container.

It is accordingly a primary object of the invention to provide an absorbing agent-entrained polymeric product that provides an effective amount of moisture-to-absorbing agent contact, preferably and surprisingly, without the use of wicking fibres.

One solution to this problem has been provided in applicant's own WO2005/049297, which discloses a moisture absorbing polymeric product comprising a blend of a thermoplastic material and an absorbing agent, wherein the product comprises at least one migration zone at a surface of the product and an interior region, wherein the maximum concentration of the absorbing agent within the migration zone is at least twice that of the absorbing agent within the interior region. Optionally, the migration zone of said product exhibits a gradient in concentration of absorbing agent. Furthermore disclosed is a method of producing said product.

However, there was a need for an alternative and simple approach in order to ensure sufficient contact between the water absorbing agent and the moisture or moist atmosphere, which e.g. might built up in a container or closed bag such as a sachet containing a one or more products such as chemicals, diagnostics, pharmaceuticals, food, spices and herbs. Only if said contact is sufficient the moisture can be effectively removed, and the water content in the product contained in the container, bag and/or in the atmosphere surrounding said product can be reduced to an acceptable level or even to zero. Therefore, the problem underlying the present invention was to find a way of increasing the accessibility of the water absorbing agent within the polymer matrix in a simple way without relying on additional fibres.

JP 2007-291258 A relates to the technical problem of providing a molded resin article containing a desiccant and having high water-absorption rate and high water-absorption capacity. The document discloses a molded object suitable for moisture comprising a synthetic resin such as low-density polyethylene (LDPE) and linear low-density polyethylene (LLDPE) and a mixture of calcium oxide and 3A molecular sieve as a desiccant. In exemplary compositions, a 1:1 mixture of LDPE and LLDPE was used as the synthetic resin.

JP 2007-099886 A relates to the technical problem of providing a resin composition containing a desiccant and having a high and long-lasting water-absorption capacity. The document describes a molded object that is prepared from a resin composition comprising a synthetic resin such as polyethylene or polypropylene, calcium oxide and molecular sieve as a desiccant and a polymeric water-absorbent, namely sodium acrylate. In exemplary compositions, a mixture of LDPE and LLDPE in a mixing ratio of 1:1 is used as the synthetic resin.

JP 2006-116501 A relates to the technical problem of providing an absorbent resin capable of quickly absorbing moisture. The document discloses a composition comprising a resin and a desiccant mixture, wherein said desiccant mixture contains a desiccant acting by physical absorption and a desiccant acting by chemical absorption. The desiccant acting by physical absorption can be zeolite, silica gel and activated alumina. The desiccant acting by chemical absorption can be calcium oxide, calcium chloride, barium oxide and magnesium oxide.

US 20080012172 discloses a moisture absorbing polymeric product comprising a blend of non-elastomeric polymeric material and a water absorbing agent which comprises a molecular sieve and CaO.

### Brief description of the invention

It has surprisingly been found that blending a non-elastomeric polymeric material selected from thermoplastic polystyrene with a dehydrating agent (desiccant), which expands in a solid state during the process of moisture absorption, yields a moisture absorbing polymeric product which can itself generate the pores needed for an increased water transport. Upon choosing the right blend of dehydrating agent and non-elastomeric polymeric material, a moisture absorbing polymeric product is obtained having an improved dehydrating capacity while maintaining a sufficient degree of mechanical stability.

Moreover, it has also been found that said dehydrating agent can act as a diffusion enhancement agent for increasing the permeability of a polymeric material for liquids, liquid vapours or gases including water.

For instance, if CaO is used in desiccant polymers the particles are embedded in the polymer matrix. Upon adsorption of water the particles expand in a solid state and cause tensions inside the polymer matrix, which may lead to the formation of cracks and voids inside the polymer matrix. On the one hand this may lead to deterioration of mechanical strength of the article manufactured from this desiccant polymer. On the other hand this may lead to the formation of pores which may promote diffusion and, therefore, enhance the accessibility of remaining unloaded desiccant particles for water molecules.

The present invention thus provides in a first aspect a moisture absorbing polymeric product according to claim 1.

In a second aspect, the present invention provides the use of the product according to the first aspect for bottling or storing of at least one moisture sensitive material, according to claim 8.

In a third aspect, the present invention provides a method for producing a moisture absorbing polymeric product according to the first aspect of the present invention in a moulded form, according to claim 9.

### Detailed Description of the Invention

The present invention provides a highly moisture absorbing polymeric material or product comprising a non-elastomeric polymeric material selected from thermoplastic polystyrenes blended with a water absorbing agent, said agent having at least two components of which at least one is swellable when brought into contact with water, wherein the water absorbing agent comprises a combination of at least one zeolite and at least one alkaline earth metal oxide. Said water absorbing agent is also suitable as a diffusion enhancement agent for increasing the permeability of a polymeric material for at least one selected from the group consisting of liquids, liquid vapours or gases.

The "moisture absorbing polymeric product" is a solid and the shape can vary to form any product suitable to assist in moisture absorption. For example, the product may take the shape of a small cylindrical or cubical structure to be placed within a container that is intended to have a low moisture content. A further example includes lining of containers or packaging products with the absorbent polymeric material of the present invention.

The product according to the present invention can be formed to a container, in particular a storage container, a bottle, an ampoule, a small tube, a flask or a closed bag such as a sachet or a variety of other sacks.

The closure of the container or of the closed bag such as a closure cap, screw cap, clamp, top cover, upper shell, cask cover can comprise or be made exclusively of the product of the invention.

By way of example, a useful container for medicine or diagnostic strips and titration plates may be prepared by forming an exterior shell out of a substantially water impermeable thermoplastic material, such as polyethylene or polypropylene. One preferred method of manufacturing is that a full or partial liner may then be formed out of the absorbent polymeric material and added to the interior of the container. In another preferred embodiment the liner may either be formed inside the container in a dual injection mould, or formed separately from the container and later inserted. Another preferred method for forming the absorbent polymer is extrusion, and therefore the preferred method of forming such a liner would be separate extrusion of the liner and moulding of the container, with later assembly of the two parts. According to yet another preferred embodiment the absorbent polymeric material may also be used to form the entire product (e.g. container or strip etc.), i.e. the entire product consists of the moisture absorbing polymeric material as defined herein. Thus, according to this embodiment no external shell is present.

The moisture absorbing polymeric material may be used in any application in which absorption of moisture is desirable. Non-limiting examples include packaging of goods that are sensitive to moisture, such as chemicals, diagnostics, pharmaceuticals, food, spices and herbs other nutritional products and water sensitive technical products such as semiconductors or any general application that makes use of confined spaces in which a low humidity level is required over a period of time. This includes, without limitation, primary and secondary packaging. One further embodiment is directed to a stick used in wafer manufacturing. A further use of the moisture absorbing polymeric material is in odour-absorbing applications.

Suitable "non-elastomeric polymeric materials" are selected from thermoplastic polystyrenes.

"Thermoplastic material" as used herein is defined as a polymeric material that exhibits thermoplastic properties.

Thermoplastic polystyrenes include High-Impact polystyrene (HIPS).

"Desiccant", "absorbing agent" or "water absorbing agent", as used herein unless otherwise stated, is defined as any material capable of absorbing or adsorbing moisture, or otherwise removing moisture from a surrounding atmosphere. Although technically different in the mechanism of reaction, for the purposes of this invention, the terms absorbing and adsorbing are intended to be used interchangeably.

Water absorbing agents according to the invention include desiccants, such as zeolites and alkaline earth metal oxides.

Said agent has at least one component which is swellable when brought into contact with water.

According to the invention, such agents comprise a zeolite and a swellable component, i.e. a swellable water absorbing compound.

Examples for suitable "zeolites" for water absorption are materials known under the name "Linde Type A" (LTA) ("Zeolith A") such as Zeolite MS 3A, Zeolite MS 4A and Zeolite MS 5. A detailed compilation of zeolithes is listed in EP 0881193 B1. Furthermore, suitable zeolites are listed by international three letter codes (IUPAC): ABW, ACO, AEI, AEL, AEN, AET, AFG, AFI, AFN, AFO, AFR, AFS,AFT, AFX, AFY, AHT, ANA, APC, APD, AST, ASV, ATN, ATO, ATS,ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EON, EPI, ERI, ESV, ETR, EUO, EZT, FAR, FAU, FER, FRA, GIS, GIU, GME, GON, GOO, HEU, IFR, IHW, ISV, ITE, ITH, ITW, IWR, IWV, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSE, MSO, MTF, MTN, MTT,MTW, MWW, NAB, NAT, NES, NON, NPO, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SGT, SIV, SOD, SOS, SSY, STF, STI, STT, SZR, TER, THO, TON, TSC, TUN, UEI, UFI, UOZ, USI, UTL, VET, VFI, VNI, VSV, WEI, WEN, YUG, ZON.

According to the invention "swellable components" or "swellable water absorbing agents" are alkaline earth metal oxides, which are preferably selected from the group consisting of MgO, CaO and BaO, and the most preferred swellable water absorbing agent is CaO.

"Swellable" within the concept of the present invention means that the volume of certain particles of the water absorbing agent, i.e. the particles belonging to the swellable component, increases when taking up or absorbing water. This can occur upon reaction with water to a different compound such as during the reaction of a metal oxide with water to the corresponding hydroxide.

For instance, calcium oxide (CaO) can be used as desiccant. Unlike zeolites or silica gel in which the adsorption of water is a physical process (physisorption) calcium oxide undergoes a chemical reaction (chemisorption). It is also known that CaO has an adsorption capacity of ca. 39% by weight compared to ca. 20% by weight of zeolite 4A. Once calcium oxide gets into contact with water, either in liquid or gaseous form, calcium hydroxide is formed exothermally:

CaO + H₂O → Ca(OH)₂

During this reaction the density of the calcium salt rapidly decreases, i.e. the volume of the Ca(OH)₂ is greater than that of CaO.

If CaO is used in desiccant polymers the particles are embedded in the polymer matrix. Upon adsorption of water the particles expand and cause tensions inside the polymer matrix, which can lead to the formation of cracks and voids inside the polymer matrix enhancing the accessibility of remaining unloaded desiccant particles for water molecules.

One embodiment of this aspect of the invention is a mixture of zeolite and CaO in a desiccant polymer.

Using a mixture of both CaO and zeolite can combine the positive effect of CaO while maintaining an acceptable level of mechanical stability.

The concept of volume increase or decrease upon water absorption can be applied on other salts which fulfil the following three conditions:
1. Additives should exhibit a low solubility in water in order to prevent an undesired leaching of salts from the polymer matrix.
2. Potential additives should act as desiccants and readily absorb water.
3. The absorption of water should result in a change in density and thus volume, preferably in an increase in volume.

Examples according to the invention are magnesium oxide.

Where applicable, compositions of the invention further include appropriate quantities, preferably up to 10 percent, and most preferably up to 5% by weight of any organic or inorganic additives that are customary in the field of plastics, such as fillers, reinforcing agents, plasticizers, stabilizers, dyes, slipping agents, wetting agents, dispersants, anti-clumping agents, anti-static agents, processing agents, blowing agents, and pigments.

Notwithstanding, the absorbent polymeric material preferably does not include wicking fibres, as these fibres may burn or melt during the manufacturing process. The inclusion of fibres to act as a wick for moisture is unnecessary because of the increased moisture absorbency of the layered structure of the composition of the invention.

The moisture absorbing polymeric material preferably contains:
about 20% to about 90% by weight of one or more thermoplastic polystyrene materials; and
about 10% about 80% by weight of the water absorbing agent.

The water absorbing agent according to the invention can be used as a diffusion enhancement agent in a method for enhancing the diffusion, increasing the permeability of a polymeric material for at least one selected from the group consisting of liquids, liquid vapours or gases.

The diffusion of liquids, vapours and gases through a polymeric material, or the permeability for liquids, vapours and gases in general of a polymeric material can for example be increased for
- liquids such as water and polar organic solvents
- liquid vapours such as water vapour; and
- gases such as O₂, N₂, CO, CO₂, methane, SO₂, SO₃, N₂O ozone, when incorporating the diffusion enhancement agent of the present invention into said polymeric material, and subsequently treating the polymeric product obtained, e.g. the absorbent polymeric materials described herein, with water in liquid or vapour state for a period of time sufficient to generate the void spaces needed for one or more of the above liquids, liquid vapours and gases in order to be able to penetrate or diffuse through the polymeric matrix.

In general, the absorbent polymeric materials are manufactured by compounding methods.

In one preferred method of manufacture of the absorbent polymeric material, the polymer and copolymer (if any) are mixed by dry blending without the use of solvents or without melting the polymeric materials. The blended polymer and copolymer (if any) are then fed into a first zone of a compounding machine simultaneously (but independently) with the absorbing agent. This first zone of mixing is preferably kept at a temperature below the melting points of all components, preferably about 50°C. The mixture is then fed into the subsequent zones of the compounding machine where the polymer and copolymer material are melted and blended with the absorbing agent. In a preferred embodiment the blended materials are then extruded through a die into a cold water batch and shred into granules.

Generally, in a second step the absorbent polymeric materials are formed into products. This forming of products may be performed by any known method for producing thermoplastic products, such as extrusion, injection moulding, blow moulding, etc., provided that such method involves transforming the absorbent polymeric material into essentially a non-solid state, preferably by melting the thermoplastic material to a liquid state.

### Example not according to the invention:

In the first series of experiments polyethylene-LLD has been dry-mixed with 50% by weight of molecular sieve of the zeolite types 3A, 4A, 5A, 6A, 7A and 8A, preferably types 3A, 4A and 5A. This mixture was used for processing by injection moulding at 180-200°C using an injection moulding machine of type Klockner Ferromatik FX-25 to form tablets of the size 75 x 50 x 1,5 mm. These tablets were stored at T = 40°C and 75% relative humidity in a climate chamber. The weight gain has been measured gravimetrically at given time intervals (see Table 1).

A second series of samples has been prepared using 98% by weight of the mentioned polyethylene type containing 50% by weight of molecular sieve. This 2AP type compound has been pre-mixed with 2% by weight of the masterbatch type Ampacet 101499 (specific gravity 1.45 g/cm³ (nominal), melt index 10-17 g/10 min. (nominal) ASTM D1238, at 190°C/2.16 kg) which consists of 50% by weight polyethylene-LLD, 46% by weight of calcium oxide (CaO) and 4% by weight of zinc stearate. Accordingly, the total formulation contains 0.96% by weight of CaO.

Like the samples of the Ampacet 101499 free formulation this mixture has been processed by injection moulding at 180-200°C, and injection moulded at T = 180-200°C using the same equipment as above forming tablets of the above mentioned dimensions. These tablets have been stored under the same conditions as mentioned in a climate chamber. The weight gain by water absorption was recorded frequently by gravimetric methods.

The results of the experiments are shown in Table 1. It can be clearly seen that the addition of a small amount of CaO (0.92% by weight) leads to an overproportional increase of the water absorption which can be described as a distinct synergistic effect.

**Table 1: Moisture uptake of polyethylene based formulations with desiccants at T = 40°C/75% relative humidity**

| | | | | | | | |
|---|---|---|---|---|---|---|---|
| Exposure time [days] | 0.0 | 5.2 | 8.2 | 21.0 | 26.2 | 36.1 | 47.0 |
| 2AP formulation containing 50% by weight of molecular sieve [uptake in % by weight] | 0.0 | 2.9 | 3.9 | 6.6 | 7.4 | 8.6 | 9.6 |
| Formulation consisting of 98% by weight of PE based 2AP containing 50% of molecular sieve and 2% by weight of polyethylene-LLD with 46% by weight CaO (total amount CaO: 0.92% by weight) | 0.0 | 3.0 | 4.2 | 7.1 | 7.9 | 9.2 | 10.4 |
| Δ [%] | 0.0 | 3.3 | 7.1 | 7.0 | 6.3 | 6.5 | 7.7 |

## Claims

1. A moisture absorbing polymeric product comprising a blend of
- a non-elastomeric polymeric material selected from thermoplastic polystyrenes, and
- a water absorbing agent, said agent having at least two components of which at least one is swellable when brought into contact with water,
wherein the water absorbing agent comprises a combination of at least one zeolite and at least one alkaline earth metal oxide.

2. The product according to claim 1 wherein the alkaline earth metal oxide is selected from the group consisting of MgO, CaO and BaO.

3. The product according to claim 2 wherein the zeolite is selected from the group consisting of molecular sieves of the zeolite types 3A, 4A, 5A, 6A, 7A, and 8A.

4. The product according to any of the claims 1 to 3 wherein a wicking fibre is not added to the polymeric material and the absorbing agent.

5. The product according to any of the claims 1 to 4 wherein the product is exclusively made of the blend of the non-elastomeric polymeric material and the water absorbing agent.

6. The product according to any of claims 1 to 5 wherein the product has the form of a container and optionally has a closure.

7. The product according to claim 6 additionally comprising at least one outer layer made of a polymeric material which does not comprise a water absorbing agent such as defined in any of the preceding claims.

8. Use of the product as defined in claim 6 or claim 7 for bottling or storing of at least one moisture sensitive material.

9. A method for producing a moisture absorbing polymeric product as defined in claim 6 comprising
- producing a non-elastomeric polymeric material as defined in claim 1,
- combining said non-elastomeric polymeric material in a molten state with a water absorbing agent as defined in any of the claims 1 to 3, and subsequently
- forming the combination of said non-elastomeric polymeric material and said water absorbing agent into the moisture absorbing polymeric product by using an injection moulding method or an extrusion method of manufacture.

10. The method according to claim 9 wherein an extrusion method of manufacture is employed in the forming step.

## Patentansprüche

1. Feuchtigkeitsabsorbierendes Polymerprodukt, umfassend eine Mischung von
- einem nicht-elastomeren Polymermaterial, ausgewählt aus thermoplastischen Polystyrolen, und
- einem wasserabsorbierenden Mittel, wobei das Mittel mindestens zwei Komponenten aufweist, von denen mindestens eine quellbar ist, wenn sie in Kontakt mit Wasser gebracht wird,
wobei das wasserabsorbierende Mittel eine Kombination von mindestens einem Zeolithen und mindestens einem Erdalkalimetalloxid umfasst.

2. Produkt nach Anspruch 1, wobei das Erdalkalimetalloxid aus der Gruppe ausgewählt ist, bestehend aus MgO, CaO und BaO.

3. Produkt nach Anspruch 2, wobei der Zeolith aus der Gruppe ausgewählt ist, bestehend aus Molekularsieben der Zeolithtypen 3A, 4A, 5A, 6A, 7A und 8A.

4. Produkt nach einem der Ansprüche 1 bis 3, wobei eine Faser mit Dochteffekt nicht zum Polymermaterial und dem absorbierenden Mittel hinzugefügt wird.

5. Produkt nach einem der Ansprüche 1 bis 4, wobei das Produkt ausschließlich aus der Mischung des nicht-elastomeren Polymermaterials und des wasserabsorbierenden Mittels hergestellt ist.

6. Produkt nach einem der Ansprüche 1 bis 5, wobei das Produkt die Form eines Behälters hat und wahlweise einen Verschluss aufweist.

7. Produkt nach Anspruch 6, zusätzlich umfassend mindestens eine Außenschicht aus einem Polymermaterial, das kein wasserabsorbierendes Mittel umfasst, wie es in einem der vorstehenden Ansprüche definiert wird.

8. Anwendung des Produkts, wie in Anspruch 6 oder 7 definiert, zum Abfüllen in Flaschen oder Lagern von mindestens einem feuchtigkeitsempfindlichen Material.

9. Verfahren zum Herstellen eines feuchtigkeitsabsorbierenden Polymerprodukts, wie in Anspruch 6 definiert, umfassend
- Herstellen eines nicht-elastomeren Polymermaterials, wie in Anspruch 1 definiert,
- Kombinieren des nicht-elastomeren Polymermaterials im geschmolzenen Zustand mit einem wasserabsorbierenden Mittel, wie in einem der Ansprüche 1 bis 3 definiert, und nachfolgend
- Formen der Kombination des nicht-elastomeren Polymermaterials und des wasserabsorbierenden Mittels in das feuchtigkeitsabsorbierende Polymerprodukt durch Anwenden eines Spritzguss- oder eines Stranggussherstellungsverfahrens.

10. Verfahren nach Anspruch 9, wobei ein Stranggussherstellungsverfahren im Formgebungsschritt eingesetzt wird.

## Revendications

1. Produit polymère absorbant l'humidité comprenant un mélange de
- un matériau polymère non élastomère choisi parmi des polystyrènes thermoplastiques, et
- un agent absorbant l'eau, ledit agent ayant au moins deux composants dont au moins un pzur gonfler lorsqu'il est mis en contact avec l'eau,
dans lequel l'agent absorbant l'eau comprend une combinaison d'au moins une zéolite et au moins un oxyde de métal alcalino-terreux.

2. Produit selon la revendication 1, dans lequel l'oxyde de métal alcalino-terreux est choisi dans le groupe constitué de MgO, CaO et BaO.

3. Produit selon la revendication 2, dans lequel la zéolite est choisie dans le groupe constitué de tamis moléculaires des types de zéolite 3A, 4A, 5A, 6A, 7A et 8A.

4. Produit selon l'une quelconque des revendications 1 à 3, dans lequel une fibre capillaire n'est pas ajoutée au matériau polymère et à l'agent absorbant.

5. Produit selon l'une quelconque des revendications 1 à 4, le produit étant exclusivement constitué du mélange du matériau polymère non élastomère et de l'agent absorbant l'eau.

6. Produit selon l'une quelconque des revendications 1 à 5, le produit ayant la forme d'un récipient et comportant facultativement une fermeture.

7. Produit selon la revendication 6, comprenant en outre au moins une couche externe constituée d'un matériau polymère qui ne comprend pas un agent absorbant l'eau tel que défini dans l'une quelconque des revendications précédentes.

8. Utilisation du produit tel que défini dans la revendication 6 ou la revendication 7 pour l'embouteillage ou le stockage d'au moins un matériau sensible à l'humidité.

9. Procédé de production d'un polymère absorbant l'humidité tel que défini dans la revendication 6, comprenant
- la production d'un matériau polymère non élastomère tel que défini dans la revendication 1,
- la combinaison dudit matériau polymère non élastomère à l'état fondu avec un agent absorbant l'eau tel que défini dans l'une quelconque des revendications 1 à 3, puis
- le formage de la combinaison dudit matériau polymère non élastomère et dudit agent absorbant l'eau dans le produit polymère absorbant l'humidité au moyen d'un procédé de moulage par injection ou d'un procédé de fabrication par extrusion.

10. Procédé selon la revendication 9, dans lequel un procédé de fabrication par extrusion est utilisé dans l'étape de formage.
